# EUROPEAN PATENT SPECIFICATION

(11) **EP 3 695 685 B1**
(45) Date of publication and mention of the grant of the patent: **25.06.2025**
(21) Application number: 18793117.5
(22) Date of filing: 05.10.2018
(51) Int. Cl.: H05B 6/10, H05B 6/40, F01D 5/06

(54) **INDUCTION HEATING WITH A FLEXIBLE HEATING JACKET, FOR ASSEMBLY OR DISASSEMBLY OF COMPONENTS IN A TURBINE ENGINE**
INDUKTION HEIZUNG MIT EINER FLEXIBLEN HEIZHÜLLSE, ZUR MONTAGE ODER ZERLEGUNG VON KOMPONENTEN IN EINEM TURBINENMOTOR
CHAUFFAGE À INDUCTION AVEC UNE MEMBRANE FLEXIBLE CHAUFFANTE, POUR LE MONTAGE ET LE DÉMONTAGE DE COMPOSANT DANS UN MOTEUR À TURBINE

(30) Priority: 10.10.2017 US 201762570265 P
(43) Date of publication of application: 19.08.2020
(73) Proprietor: Siemens Energy Global GmbH & Co. KG, 81739 München (DE)
(72) Inventor: CHOHAN, Harry, Pointe-Claire, Québec H9R 5Y3 (CA)
(74) Representative: Patentanwaltskanzlei WILHELM & BECK
(86) International application number: PCT/US2018/054553
(87) International publication number: WO 2019/074784

(56) References cited:
- WO-A1-2012/094765
- WO-A1-2015/154833
- WO-A1-2017/150627
- WO-A2-2007/128384
- DE-U1- 20 008 937
- GB-A- 2 104 359

## Description

This application claims priority under, and is a continuation-in-part of United States utility patent application serial number 62/570,265, filed October 10, 2017.

### TECHNICAL FIELD

Disclosed embodiments relate to assembly and disassembly of components of turbine engines. More particularly, some disclosed embodiments relate to assembly and disassembly of hubs, including power take-off hubs, and mating shafts of turbine engines.

### BACKGROUND

Gas turbine engines typically comprise a casing or cylinder for housing a compressor section, a combustion section, and a turbine section. A supply of air is compressed in the compressor section and is directed into the combustion section. The compressed air enters the combustion inlet and mixes with fuel. The air/fuel mixture is then combusted to produce high temperature and high-pressure (working) gas. This working gas then travels through the transition and into the turbine section of the turbine.

The turbine section typically comprises rows of vanes, which direct the working gas to the airfoil portions of the turbine blades. The working gas travels through the turbine section, causing the turbine blades to rotate, thereby turning a rotor attached thereto. The rotor is also attached to the compressor section, thereby turning the compressor and may be operatively connected to an electrical generator for producing electricity. High efficiency of a combustion turbine is improved by heating the gas flowing through the combustion section to as high a temperature as is practical.

The extreme conditions, which gas turbines experience, require maintenance and inspection of the various components to prevent failure of the gas turbine engine. Servicing these components can be time-consuming using traditional methods to assemble and disassemble the components. Improving the assembly and disassembly of components is important in saving costs.

Document WO 2012/094765 A1 informs about an induction heating apparatus for use in pre-heating pipe joints. The induction heating apparatus comprises a frame for applying around the pipe joint, and an induction heating coil made from Litz cable wires.

Document WO 2007/128384 A2 describes a device and a method to establish a Joint connection with a sleeve comprising at least one susceptor by inductive heating by a welding device.

Document GB 2 104 359 A discloses an induction heating ring, which is adapted for removably surrounding a pipe and is provided with two frames, connected in end to end circumferential relationship. A plurality of electrically conducting wires are carried upon the frames. An electrical coupling assembly comprises a male connector to be in received in a female connector, wherein each connector being provided with a plurality of coil contacts, each connected to an end of the conducting wires.

Document DE 200 08 937 U1 informs about a device for inductive heating of a chuck with an inductor coil, in which the chuck is received, and a supply circuit for generating and supplying electrical energy to the inductor coil, wherein a measuring device is provided, which determines a measured value which is a measure for the power consumed by the inductor coil. The device further comprises a control device for controlling the supply circuit depending on the measured value.

Document WO 2015/154833 A1 describes a method for dismounting an annular sleeve that is shrunk on a roll core of a press roll, wherein the annular sleeve is heated so as to expand and is removed from the roll core. Said method is characterized in that the annular sleeve is inductively heated using an induction coil.

Document WO 2017/150627 A1 discloses a heat processing device with a heating unit and a workpiece, which is inductively heated to a target temperature. The heating unit comprises a plurality of coil members, each having a ring-shaped coil portion capable of surrounding the workpiece and disposed coaxially to the workpiece, and a frame body supporting each of the coil members to be movable in the axial direction while maintaining the coil portions coaxial to each other.

It is an object of the present invention to overcome the above mentioned disadvantages. The object is met by the independent claims. Further preferred embodiments are a part of the dependent claims.

### SUMMARY

Briefly described, aspects of the present disclosure relate to assembly and/or disassembly of components within a gas turbine engine, such as hubs and mating shafts. Mating hub and shaft, as well as other similarly mating components, are assembled or disassembled by wrapping a flexible heating jacket around the hub. Ends of cable loops in the heating jacket are joined by selectively separable electrical connectors. The separated ends of the cable loops are wrapped around the hub and re-joined by coupling the respective electrical connectors. The hub is heated by supplying electric current through the cable loops of the jacket with a power source, increasing relative differential temperature of the hub higher than that of the shaft. The heated hub expands; this facilitates assembly or disassembly of the mating hub and shaft. In some embodiments, local heating of the mating hub and shaft is selectively modified by altering pitch spacing between individual coil loops, or by altering power applied to individual coil loops. In some embodiments, a controller regulates power applied to the coil loops by the power source. In some embodiments, the controller regulates power applied to the coil loops based at least in part by temperature of the mating components. In some embodiments, the controller determines temperature of the mating components with hub and/or shaft sensors coupled to it.

Exemplary embodiments described herein feature an induction heating apparatus for disassembly or assembly of a first component, such as a hub, from a second component, such as a shaft, of a gas turbine engine. The exemplary apparatus includes a flexible heating jacket for wrapping about an outer circumferential surface of the first component. The heating jacket includes an electrically conductive, flexible cable, having a plurality of loops. The loops collectively define a three-dimensional profile, with relative pitch orientation defined between adjacent loops. The three-dimensional profile is selectively sized to abut against and envelop the first component when wrapped by the jacket. A pair of first and second coil holders are respectively coupled to each respective loop of the cable, for maintaining the respective relative pitch orientation between adjacent loops of the plurality loops. A plurality of electrically conductive electrical connectors is interposed between the first and second coil holders. Each electrical connector has selectively separable first and second connector portions, respectively conductively coupled in series within a corresponding loop of the cable. The apparatus includes a power source coupled to the cable of the heating jacket, for heating the cable loops when the first and second connector portions of the plurality of electrical connectors are respectively coupled to each other. The power source passes current through the respective loops, so that the first component is heated to a higher temperature than the second component.

Other exemplary embodiments described herein feature a method for disassembly or assembly of an inner surface of a first component, such as a hub, from a mating outer surface of a second component, such as a shaft of a gas turbine engine. A flexible heating jacket (40, 70, 80, 90) is provided. The jacket includes an electrically conductive, flexible cable, having a plurality of loops. A plurality of electrically conductive electrical connectors, respectively having selectively separable first and second connector portions, are conductively coupled in series within a corresponding loop of the cable. Each of the respective first and second connector portions of each electrical connector are separated from each other. An outer surface of the first component is inserted within the jacket, by passing the first component between separated first and second connector portions of each electrical connector. The respective first and second connector portions of each electrical connector are coupled to each other; this envelops the outer circumferential surface of the first component in abutting contact with the loops. The first component is heated by supplying electrical current to the flexible cable of the heating jacket with a power source, increasing relative temperature of the first component higher than that of the second component, and expanding an inner surface of the first component greater than an outer surface of the second component. Then, the heated inner surface of the first component and the mating outer surface of the second component are separated or joined.

The respective features of the exemplary embodiments of the invention that are described herein may be applied jointly or severally in any combination or subcombination.

### BRIEF DESCRIPTION OF THE DRAWINGS

The exemplary embodiments of the invention are further described in the following detailed description in conjunction with the accompanying drawings, in which:
Fig. 1 is a cross sectional schematic view of a mated hub and shaft;
Fig. 2 is a top down plan view of a mated power take-off hub and shaft, including arrays of temperature sensors;
Fig. 3 is an elevational cross-sectional view of the hub and shaft of Fig. 2, within an aeroderivative gas-turbine engine;
Fig. 4 is a time-temperature graph illustrating the induction heating of an exemplary mated hub and shaft of a gas turbine engine;
Fig. 5 is a perspective view of a hub within an induction heating apparatus;
Fig. 6 is a perspective view of a hub and shaft of an aeroderivative gas-turbine engine within an induction heating apparatus;
Fig. 7 is a perspective view of an embodiment of an induction heating apparatus, including flexible heating jacket in a closed position, with a helically wrapped cable;
Fig. 8 is a top plan view of the flexible jacket of the induction heating apparatus of Fig. 7;
Fig. 9 is a detailed view of coupled first and second electrical connector portions of an electrical connector and their mating cable ends, of Figs. 7 and 8;
Fig. 10 is a schematic view of the flexible jacket of the induction heating apparatus of Fig. 7, not part of the invention, wrapped about the circumference of a hub and mating shaft, after closure of the electrical connectors;
Fig. 11 is a schematic view of another embodiment of a flexible jacket of an induction heating apparatus, wrapped about the circumference of a hub and mating shaft, after closure of the electrical connectors, wherein each discrete, individual loop of the flexible cable is independently heated;
Fig. 12 is a schematic view of another embodiment of a flexible jacket of an induction heating apparatus, wrapped about the circumference of a hub and mating shaft, after closure of the electrical connectors, wherein each discrete, individual loop of the flexible cable is heated in parallel with the other discrete loops; and
Fig. 13 is a schematic view of another embodiment of a flexible jacket of an induction heating apparatus, wrapped about the circumference of a hub and mating shaft, after closure of the electrical connectors, wherein each discrete, individual loop of the flexible cable is heated in series with the other discrete loops.

To facilitate understanding, identical reference numerals have been used, where possible, to designate identical elements that are common to the figures. The figures are not drawn to scale.

### DESCRIPTION OF EMBODIMENTS

To facilitate an understanding of embodiments, principles, and features of the present disclosure, they are disclosed hereinafter with reference to implementation in illustrative embodiments. Embodiments of the present disclosure, however, are not limited to use in the described systems or methods and may be utilized in other systems and methods as will be understood by those skilled in the art.

The components described hereinafter as making up the various embodiments are intended to be illustrative and not restrictive. Many suitable components that would perform the same or a similar function as the components described herein are intended to be embraced within the scope of embodiments of the present disclosure.

While multiple embodiments are described below, it should be understood that the underlying concepts and invention are applicable to induction heating of other components within a gas turbine engine and similar industrial applications.

A power take off (PTO) hub extraction from its mating shaft within a gas turbine engine, such as an aeroderivative engine, is difficult to perform. The current procedures employ a thermal blanket and liquid nitrogen to overcome the interference designed in the component.

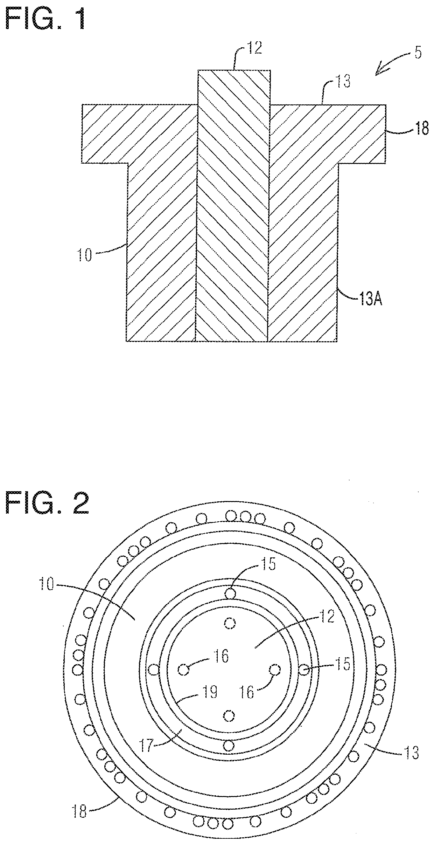

Fig. 1 illustrates a schematic view of a gas turbine component 5 that comprises a hub 10 (e.g., a PTO hub) and shaft 12. The hub 10 is secured on a shaft 12 via an interference fit. To overcome the interference fit between the hub 10 and the shaft 12 a temperature differential is created between the hub 10 and the shaft 12.

The temperature differential may be achieved by using a heating pad to heat up the outer circumferential surface 18 of the hub 10, by transmitting thermal energy to the hub 10 via conduction, radiation and/or convection. Liquid nitrogen may be used to cool the shaft 12. The cooling and heating of each of the respective parts creates a temperature differential between the hub 10 and the shaft 12. The creation of the temperature differential permits the removal or placement of the hub 10 on the shaft 12 using a pressure tool that uses 10,000 lbs. of pressure.

The procedure described above may not create an adequate temperature differential between the hub 10 and the shaft 12, to remove adequately the interference between the hub 10 and the shaft 12. In addition to the temperature differential at the interference between the hub 10 and the shaft 12 it is important to ensure the top flange 13 of the hub 10 is heated sufficiently and evenly to allow the expansion of the inner diameter of the hub 10. The heating and cooling of the hub 10 and shaft 12 using conventional methods may occur unevenly. Extraction of the shafts 12 is often not possible due to significant interference between mated parts made of materials, such as Jethete^{™}. Furthermore, the overall process may take between 8-10 hours. Additionally, the size of the component combined with the narrow tolerances and adhesive friction wear from service cooperation makes it almost impossible to expand and enable removal without difficulties. Removal of the shaft 12 from the hub 10 typically occurs with some levels of difficulties; rarely is there a removal without some form of damage to the gas turbine component 5 that can affect performance and costs of the engine.

In order to address the issues with the procedure discussed above, it was recognized that a more controlled and expedient removal process can be accomplished via the use of electrical induction heating. The application and use of induction heating for this purpose is discussed in further detail below. While the following examples discuss extraction of a shaft 12 from a PTO hub 10, it should be understood that the induction heating method described and set forth herein may also be used for assembly and/or disassembly of other components for which a temperature differential would be needed.

A temperature difference of 70 °C between PTO hub 10 and shaft 12 may be needed to achieve the desired interference expansion between the hub 10 and shaft 12 so as to remove the shaft 12 from the hub 10. A temperature difference of 70 °C takes into consideration the average temperature at the mid-section of the top flange 13 of hub 10. However, the top flange 13 of the hub 10 has a significant mass; its expansion is also needed to allow the inner smaller diameter of the hub 10 to open. A lack of uniformity in the temperature of the hub 10 can cause internal stresses in the portion of the hub 10 that resists the expansion of the inner interference diameter. It should be understood that while a temperature difference of 70° C is proposed, that a smaller or greater temperature difference may also be sufficient or exceed the needed temperature difference for extraction. Ideally, for the example discussed herein, a temperature difference within the range of 55-85 °C is preferred for the removal of the shaft 12 from the hub 10.

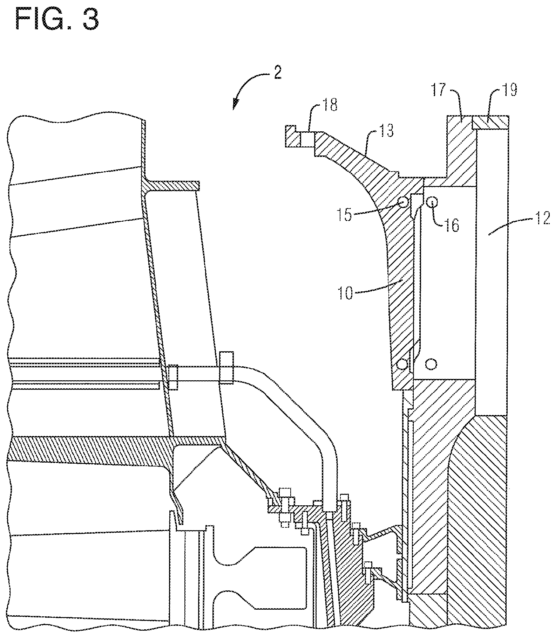

Fig. 2 is a top down schematic view of the hub 10 and shaft 12, while Fig. 3 is their corresponding elevational cross within a gas turbine engine 2. In order to determine the temperature of the hub 10 and the shaft 12, the PTO hub 10 and shaft 12 is fitted with eight type-N thermocouples. There are four hub thermocouples 15 and four shaft thermocouples 16. While eight thermocouples are shown in the figure, it should be understood that fewer or more thermocouples may be used in determining the temperatures of the hub 10 and the shaft 12. Indeed, there may be no need for thermocouples in those situations where control of the applied induction has already been determined to follow a prescribed pattern (e.g., prescribed applied power intensity and time).

The hub thermocouples 15 and shaft thermocouples 16 are applied to the inner surfaces of the regions of the hub 10 and the shaft 12. The placement of the hub thermocouples 15 and shaft thermocouples 16 is selected to minimize current induction that would be generated in the lead wires of the hub thermocouples 15 and shaft thermocouples 16 by induction caused by the cables 26. The induction of current in the lead wires due to the cables 26 would introduce noise or voltage. The introduction of noise or voltage would affect temperature readings taken by the thermocouples and possibly damage any equipment used in the controlling and monitoring of the hub thermocouples 15 and shaft thermocouples 16.

Using induction heating, the temperature of the hub 10 can be increased rapidly while the temperature of the shaft 12 remains stable. The temperature of the shaft 12 increases in a linear fashion.

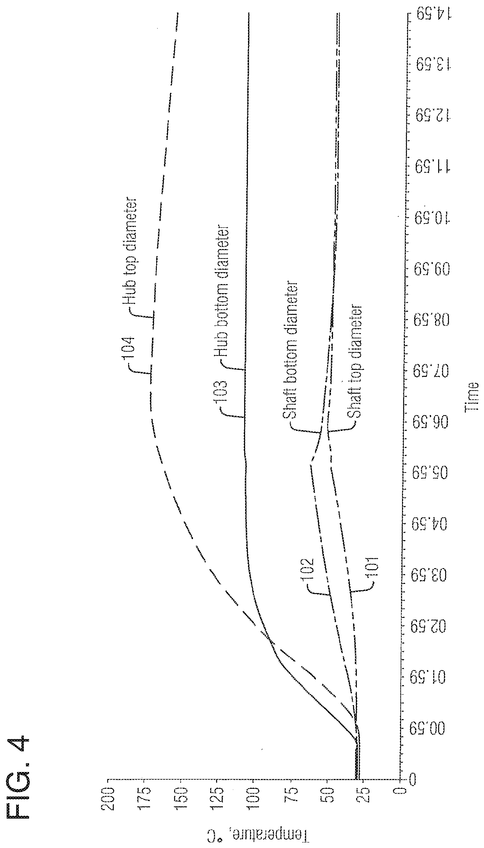

In some embodiments, a favourable delta T of 75 °C can be achieved at the interface of the hub 10 and the shaft 12 within two minutes of the application of induction heating. The interface surfaces are defined by an inner circumferential surface of the hub 10 and the outer circumferential surface of the shaft 12. Applied induction heat is radiating from the hub outer surface 18 inwards towards the hub inner surface 17 when using the induction apparatus 25 (discussed in detail below with respect to Fig. 4). The average temperature of the hub 10 is in fact higher than that which is measured by the hub thermocouples 15 and the shaft thermocouples 16. This means the expansion of the hub 10 is greater than that which would be interpreted from simply considering the readings from the hub thermocouples 15 and the shaft thermocouples 16. Similarly, because the temperature measured on the shaft 12 is located on the shaft outer surface 19, the actual average temperature of the shaft 12 is in fact lower than the reading of the shaft thermocouple 16. In addition, the actual temperature differential (delta T) is generally more favourable than interpretation based on the readings from the hub thermocouples 15 and the shaft thermocouples 16.

Using the data gathered from the hub thermocouples 15 and the shaft thermocouples 16, the timing and application of the induction energy to the hub 10 can be determined. The data may be used to establish a predetermined application of induction energy to the hub 10 so that it can efficiently and evenly establish a temperature differential that will permit removal of the shaft 12 from the hub 10 without damaging the respective components.

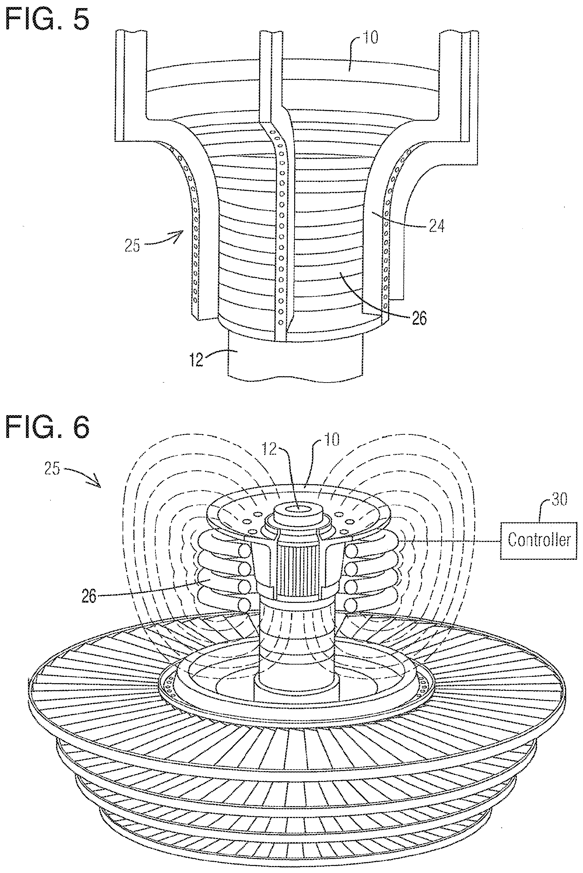

Fig. 3 is a schematic side view of the hub 10 and the shaft 12. The hub thermocouples 15 and the shaft thermocouples 16 are shown located at the hub inner surface 17. The hub thermocouples 15 and the shaft thermocouples 16 are used to measure the temperatures of the hub 10 and the shaft 12. The measurement of the temperatures is used in order to control accurately the heating of the hub 10. The hub thermocouples 15 and the shaft thermocouples 16 provide data to a controller 30 (shown below with respect to Fig. 6). The controller 30 takes the data supplied to it in order to control the heating of the hub 10 for removal or installation of the shaft 12. The controller 30 takes the data and in response to the received data adjusts the application of current power to the heating cables. The controller 30 may also have a predetermined schedule for the control of the induction heating, for efficiently providing induction heating.

While the hub thermocouples 15 and the shaft thermocouples 16 are shown located at the hub inner surface 17 and the shaft outer surface 19 they may be located at other locations on the hub 10 and the shaft 12. However, the locations illustrated are preferred due to potential interferences that may occur due to process of induction. When located at other locations, their locations may be taken into account in order to control effectively the application of induction heating. Furthermore, while the instant invention is shown having eight thermocouples there may be more or fewer depending on the needs and subsequent accuracy desired. Additionally, while thermocouples are shown, there does not need to be thermocouples. The thermocouples enable measurement of the heat to control more accurately the application of induction heating.

Fig. 4 is a graph that illustrates the increase of temperature and subsequent temperature differential caused by the induction heating. Line 101 represents the temperature increase of top portion of an exemplary shaft 12. Line 102 represents the bottom portion of the exemplary shaft 12. Line 103 represents the bottom portion of an exemplary, corresponding, mating hub 10. Line 104 represents the top portion of the exemplary hub 10. The graph illustrates how the temperature of the hub 10 increases in a more rapid fashion than the temperature of the shaft 12. This temperature differential expands the hub 10 more than the shaft 12, which allows the smooth removal of the shaft 12 from the hub 10 because the interference fit is overcome. The graph of Fig. 4 is of exemplary nature only; specific time and temperature profiles for mating components vary for different component structures, material compositions, structure of the induction heater apparatus, and the power consumption rate of the apparatus.

Figs. 5 and 6 are respectively a perspective side view of the induction apparatus 25 and a schematic drawing illustrating the use of the induction apparatus on a hub 10 and shaft 12 of an aeroderivative gas-turbine engine. The induction apparatus 25 comprises a frame 24 that has a cable 26 attached to it so that the cable forms an induction coil within the frame 24. A controller 30, shown in the Fig. 6 schematic, is operably connected to the frame 24 and the cable 26. The cable 26 is wound and attached to the frame 24 in such a way that when current, regulated by the controller 30, runs through the cable 26, induction heating occurs in the hub 10.

The frame 24 is shaped and sized to fit around the hub 10 and accommodate the cable 26. In some embodiments, the frame 24 is made of fiberglass composite panels, or other materials that are designed for electrical and thermal insulation. In some embodiments, preferably the frame 24 has handles so it can be positioned around the hub 10 with ease. The frame 24 and the cable 26 are secured in place about the outer circumference of the mated hub 10 and shaft 12.

In some embodiments, the cable 26 is preferably a dry insulated cable. The insulation for the cable is preferably a fabric/glass. In some embodiments, the cable 26 is preferably wound around the frame 24 ten times. The cable 26 is wound in this fashion in order to provide induction heating to the hub 10. However, it should be understood that it may be wound around more or less depending on the desired induction heat-transfer rate and local application to the hub 10 or other engine component structure.

The controller 30 of the induction apparatus 25 receives temperature data from the hub thermocouples 15 and the shaft thermocouples 16, to control the rate of induction heat applied to the hub 10. The controller 30 can vary power intensity and time of current application through the cable 26 reducing it or increasing it as needed to achieve desired differential heating between the mating hub 10 and shaft 12. In Fig. 6, the controller 30 also incorporates the power supply for applying current to the cable 26.

The controller 30 may comprise a processor and memory to process and store the logic for controlling the induction apparatus 25. The controller 30 may be preprogrammed to transmit the current through the cables 26 at the proper power and rate to heat the hub 10 to an appropriate temperature differential.

Referring to all of Figs. 1-6, the proposed induction process provides rapid and uniform heating to the gas turbine component 5. In this particular situation, the process provides the best conditions for extracting a shaft 12 from the hub 10, in this instance a M08 hub. Benefits associated with the process are that no liquid nitrogen is required, which saves additional costs. Another benefit is saving time by not needing to perform the intricate heating and cooling process. Still another benefit is saving time by not needing to perform unnecessary repairs, as there will be no damage on the PTO hub 10 and shaft 12. Therefore, there is no scrap or repair needed and no replicas/lab analysis required.

Induction heating devices utilizing the induction process described herein are not limited to the applications discussed so far herein. Removal/disassembly and/or placement/assembly of additional mating components in the gas turbine engine may be accomplished in the same manner. For example, other induction heating apparatus and method embodiments utilize flexible, induction heating jackets where power is applied by a power supply to the cable loops therein. In some embodiments, a controller regulates the power applied to the flexible, induction heating jacket.

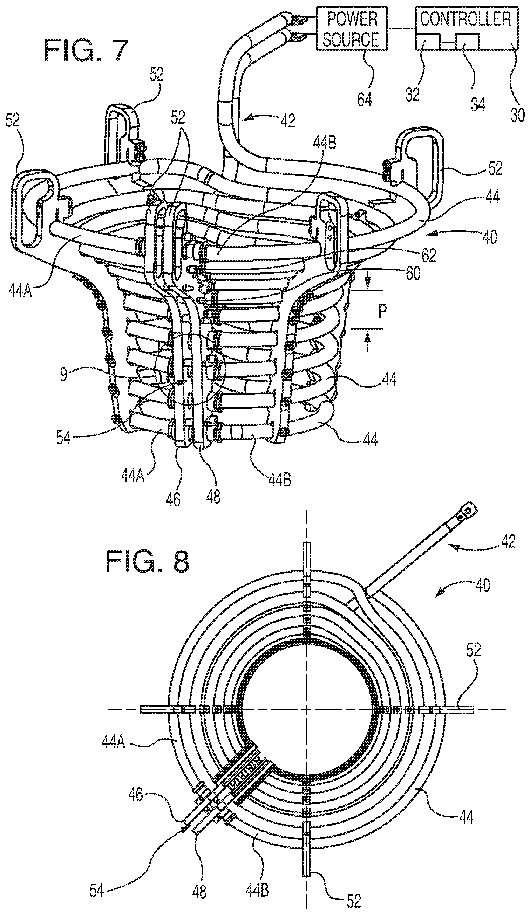

Figs. 7-10 show an induction heating apparatus (not part of the invention) for disassembly or assembly of a first component hub 10 from a second component shaft 12 of Figs. 1-3, or any other mated component pair within a gas turbine engine. Referring to all of the Figs. 1 and 7-10, the apparatus includes a flexible heating jacket 40 for selectively wrapping about the outer circumferential surface 18 of the hub 10 of the gas turbine engine 2.

The heating jacket 40 includes an electrically conductive, flexible cable 42, having a plurality of helically wrapped loops 44; the loops collectively define a three-dimensional profile, with relative pitch orientation or spacing P between adjacent loops. Here, the pitch spacing P is along the axial central axis of the hub 10 and the shaft 12. As will be described below, in some embodiments the pitch spacing P between adjacent loops is selectively varied to alter local induction heating applied to the hub 10. Generally, closer spaced loops with smaller pitch induce more localized heating in the hub. Conversely larger pitch induces less localized heating in the hub at the same current power. When the jacket is in the closed position of Figs. 7, 8 and 10, the three-dimensional profile of the helically-wrapped cable 42 and its cable loops 44 are selectively sized to abut against and envelop the outer circumferential surface 18 of the hub 10 as it is wrapped by the jacket, similar to that shown in the fixed apparatus 25 of Fig. 5. The flexible nature of the jacket 40 allows it to be wrapped about the hub 10 and shaft 16 interface while those components remain in situ within a partially assembled or disassembled engine.

The heating jacket 40 has a pair of first 46 and second 48 coil holders, and optional additional coil holders 50 that are respectively coupled to each respective loop 44 of the cable 42, for maintaining the respective relative pitch orientation P between adjacent loops of the plurality loops. The number and orientation of coil holders varies in different embodiments. In some embodiments, as is shown in Fig. 7, the coil holders incorporate handles 52, for manoeuvring the jacket 40 about a hub or other component.

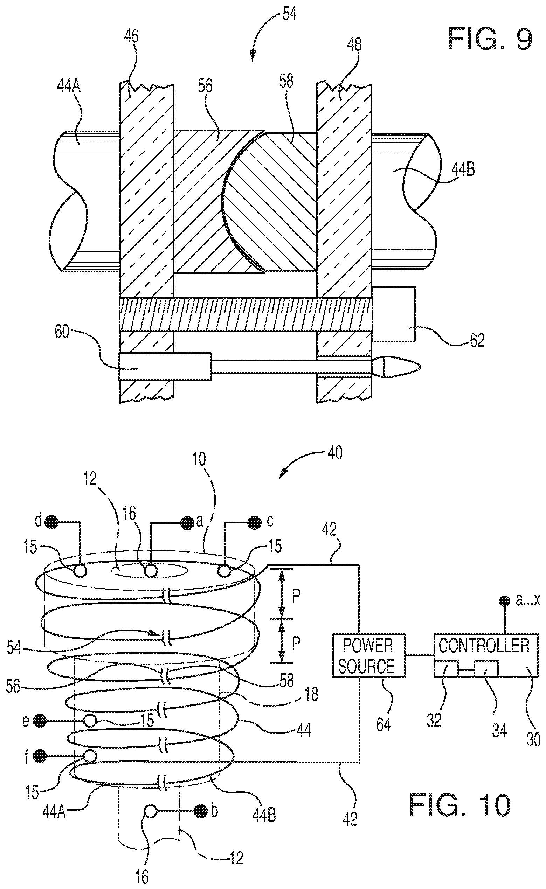

A plurality of electrically conductive electrical connectors 54 are interposed between the first 46 and second 48 coil holders. Each respective electrical connector 54 has selectively separable first 56 and second 58 connector portions. The first 56 and second 58 connector portions respectively are conductively coupled in series with terminated ends 44A, 44B of its corresponding cable loop 44 of the cable 42. As shown in Fig. 9, the first connector portion 56 has a female, concave end and the second connector portion 58 has a mating convex male end. Other embodiments reverse or alternate male and female profiles of the first 56 and second 58 mating connector portions. Other embodiments incorporate other mating profiles of the mating first 56 and second 58 connector portions. In the embodiment of Figs. 7-9, each of the respective first connector 56 portions is coupled to the first coil holder 46, electrically isolated from all of the other electrical connectors 54. Each of the respective second connector 58 portions is coupled to the second coil holder 48, also electrically isolated from all of the other electrical connectors 54. The first f56 and second 58 mating connector portions are retained in aligned, coupled position by the first 46 and second 48 coil holders. Those coil holders 46, 48 in turn are retained in alignment by a plurality of alignment pins 60 and fasteners 62.

A power source 64 is coupled in series to the helically wrapped cable 42 of the heating jacket 40, for heating the cable loops 44 when the first 56 and second 58 connector portions of the plurality of electrical connectors 54 are respectively coupled to each other, as shown in FIGs. 7-10. As is done in the induction heater 25 and controller 30 embodiment of Fig. 6, the power source 64 of the embodiment of Figs. 7-10 passes current through the respective loops 44, so that the hub 10 is heated to a higher temperature than the shaft 12. When sufficient differential temperature is established between the hub 10 and the shaft 12, the components are mated/assembled or separated/disassembled. In some embodiments, the power source 64 applies power to the cable 42 at one or more predetermined rates and time durations under supervision of a controller 30, as was previously described with respect to the apparatus 25 and controller 30 of Fig. 6.

In other embodiments, the controller 30 regulates power supplied by the power supply 64 at least in part as a function of monitored temperature of the hub 10 and/or the shaft 12, as was previously described with respect to the apparatus 25 and controller 30 of Fig. 6. In some embodiments, at least one temperature sensor 15 is coupled to the hub 10 and is in communication with the controller 30, for monitoring the hub temperature. In some embodiments, at least one temperature sensor 16 is coupled to the shaft 12 and is in communication with the controller 30, for monitoring the shaft temperature. Some embodiments incorporate one or more of both hub temperature sensors 15 and shaft temperature sensors 16 that are respectively in communication with the controller 30. Referring to the embodiment of Figs. 7 and 10, an array of a plurality of temperature sensors 15 are oriented about the hub 10, and an array of a plurality of temperature sensors 16 are oriented about the shaft 10, such as in the respective array orientations shown in Figs. 2 and 3.

Referring to Fig. 10, the controller 30 is coupled to the arrays of the hub temperature sensors 15 and the shaft temperature sensors 16, in the same way or in a similar way as the corresponding sensor arrays of Figs. 2 and 3. For simplification of the schematic diagram, the connection dots (lettered lowercase a, b, c...) of the sensors 15, 16 are in communication with the controller's sensor inputs connection dot (labelled a...x). The controller 30 is coupled to all of the temperature sensors 15, 16 in feedback loops, for regulating current flow passed through the cable loops 44 by the power source 64, so that temperature sensed by all of the temperature sensors remains below a predetermined maximum temperature. In some embodiments, the controller 30 regulates current power intensity flow time duration in accordance with a predetermined regulation plan, but it alters the regulation plan if temperature sensed by the at least one temperature sensor 15 or 16 exceeds one or more predetermined temperatures. In some embodiments, separating or joining the heated hub 10 and shaft 12 interface is performed when respective temperatures measured by all of the first sensors 15 exceeds respective temperatures measured by all of the second sensors 16 by a predetermined temperature difference (e.g., 55-85°C).

The controller 30 incorporates a processor 32 that accesses and executes instructions stored in non-volatile memory 34. The instructions stored in the memory 34 and executed by the processor 32 enables the controller 30 to perform the temperature monitoring and power source 64 control functions. While reference to an exemplary controller platform architecture and implementation by software modules executed by the processor, it is also to be understood that exemplary embodiments of the disclosure may be implemented in various forms of hardware, software, firmware, special purpose processors, or a combination thereof. Preferably, aspects of the invention embodiments are implemented in software as a program tangibly embodied on a program storage device. The program may be uploaded to, and executed by, a machine comprising any suitable architecture. Preferably, the machine is implemented on a computer platform having hardware such as one or more central processing units (CPU), a random access memory (RAM), and input/output (I/O) interface(s). The computer platform also includes an operating system and microinstruction code. The various processes and functions described herein may be either part of the microinstruction code or part of the program (or combination thereof) which is executed via the operating system. In addition, various other peripheral devices may be connected to the computer/controller platform.

It is to be understood that because some of the constituent system components and method steps depicted in the accompanying figures are preferably implemented in software, the actual connections between the system components (or the process steps) may differ depending upon the manner in which the exemplary embodiments are programmed. Specifically, any of the computer platforms or devices may be interconnected using any existing or later- discovered networking technology; all may be connected through a larger network system, such as a corporate network, metropolitan network or a global network, such as the Internet.

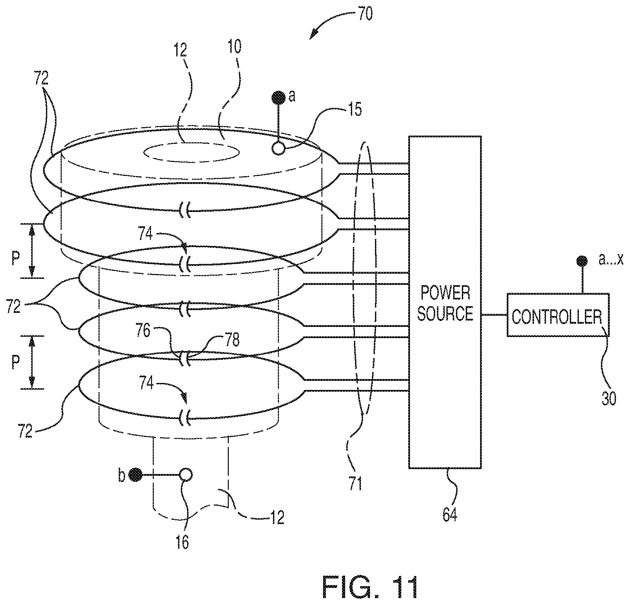

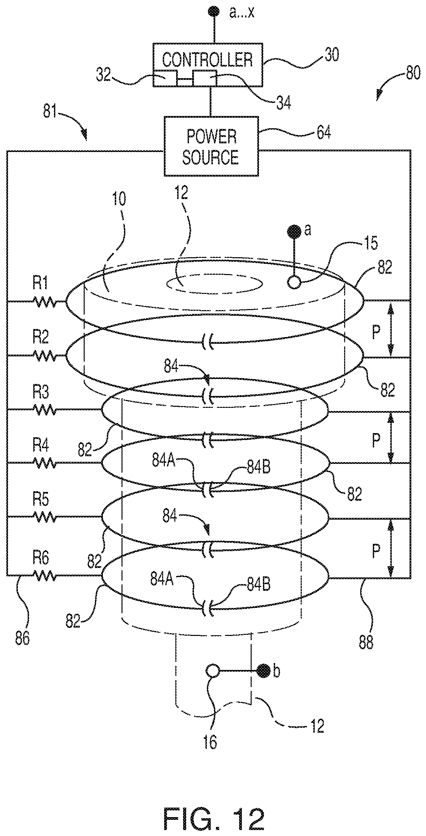

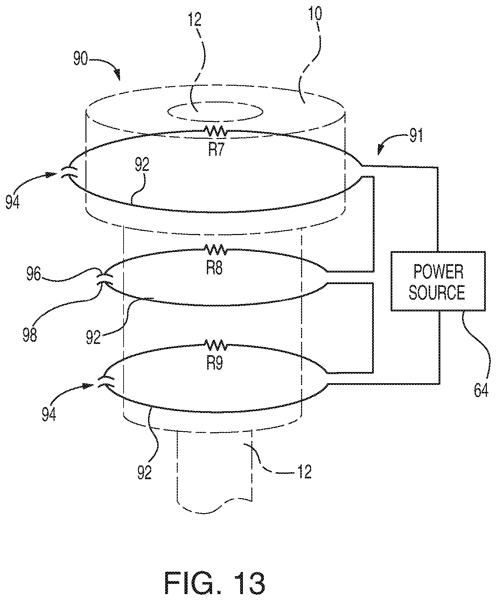

The heating circuit within the flexible heating jacket 40 of Fig. 10 incorporates a single helical cable 42 with multiple loops 44. Localized variation in induction heating to the hub 10 is accomplished by selectively varying pitch P of the cable loops 44. According to the invention, the flexible heating jacket embodiments of Figs. 11-13 respectively have heating jackets with heating circuits comprising arrays of discrete closed loops. Localized variation in induction heating to the hub 10 and the shaft 12 to one or more desired differential temperatures is accomplished by selectively varying power applied to each individual loop. In Fig 11, each loop 72 is coupled independently to a power source 64. In Fig. 12, each loop 82 is coupled in parallel to a power source 64. In Fig. 13, each loop 92 is coupled series to a power source 64. The contents of the schematic diagrams of Figs. 11-13 focus on the induction heating circuits of each embodiment. Jacket structure that supports the cable loops is deleted from those figures, and temperature sensor circuits shown in those figures have only single hub 15 and shaft 16 sensors in communication with the controller 30. Any of the embodiments of Figs. 11-13 can be constructed with the jacket structure shown in the embodiment of Figs. 7-10, and/or the temperature sensor circuits of the embodiments shown in Figs. 2-10.

In Fig. 11, the flexible heating jacket 70 incorporates a cable bundle 71 comprising a plurality of electrically isolated cable loops 72. Each loop 72 incorporates an electrical connector 74, with first 76 and second 78 connector portions. Each of the loops 72 within the cable bundle 71 is separately coupled to its power source 64. The power source 64 comprises a multi-channel power source or separate dedicated power sources, for providing power, regulated by the controller 64 to each of the loops 72. Localized heating about the hub 10 and shaft 12 is varied by varying power supplied to each individual loop 72 and by selectively varying pitch P between loops.

In Fig. 12, the flexible heating jacket 80 incorporates a cable bundle 81 comprising a plurality of electrically isolated cable loops 82. Each loop 82 incorporates an electrical connector 84, with first 84A and second 84B connector portions. Each of the loops 82 within the cable bundle 81 is coupled to its power source 64 in parallel with the other loops via the power cables 86 and 88. Localized heating about the hub 10 and shaft 12 is varied by varying power supplied to each individual loop 82 and by selectively varying pitch P between loops. In view of the parallel connection of the loops 82 to a common power source 64, power supplied to any individual loop is selectively varied by altering its resistivity (R1-R6).

In Fig. 13, the flexible heating jacket 90 incorporates a cable bundle 91 comprising a plurality of serially coupled cable loops 92. Each loop 92 incorporates an electrical connector 94, with first 96 and second 98 connector portions. Each of the loops 92 within the cable bundle 91 is coupled to its power source 64 in series with the other loops. Localized heating about the hub 10 and shaft 12 is varied by varying the cascading power drop to each downstream individual loop 92 and by selectively varying pitch P between loops. In view of the serial connection of the loops 92 to a common power source 64, power supplied to any individual loop is selectively varied by altering its resistivity (R7, R8, and R9). Cascading drop in power supplied to each downstream loop 92 results in higher heat induction applied at the upper end of the hub 10, in the localized zone where there is a thicker hub collar, and relatively lower heat induction applied at the lower, thinner end of the hub.

Although various embodiments that incorporate the invention have been shown and described in detail herein, others can readily devise many other varied embodiments that still incorporate the claimed invention. The invention is not limited in its application to the exemplary embodiment details of construction and the arrangement of components set forth in the description or illustrated in the drawings. The invention is capable of other embodiments and of being practiced or of being carried out in various ways. In addition, it is to be understood that the phraseology and terminology used herein is for the purpose of description and should not be regarded as limiting. The use of "including," "comprising," or "having" and variations thereof herein is meant to encompass the items listed thereafter and equivalents thereof as well as additional items. Unless specified or limited otherwise, the terms "mounted", "connected", "supported", and "coupled" and variations thereof are to be interpreted broadly; they encompass direct and indirect mountings, connections, supports, and couplings. Further, "connected" and "coupled" are not restricted to physical, mechanical, or electrical connections or couplings. While embodiments of the present disclosure have been disclosed in exemplary forms, it will be apparent to those skilled in the art that many modifications, additions, and deletions can be made therein without departing from the scope of the invention and its equivalents, as set forth in the following claims.

## Claims

1. An induction heating apparatus for disassembly or assembly of a first component from a second component of a gas turbine engine, comprising
a flexible heating jacket (70,80,90) for wrapping about an outer circumferential surface (18) of a first component (10) of a gas turbine engine (2), the heating jacket (70,80,90) having:
an electrically conductive, flexible cable (71,81,91), having a plurality of loops (72,82,92), the loops (72,82,92) collectively defining a three-dimensional profile that defines relative pitch orientation (P) between adjacent loops (72,82,92), the three-dimensional profile selectively sized to abut against and envelop the first component (10) when wrapped by the jacket (70,80,90);
a pair of first (46) and second (48) coil holders respectively coupled to each respective loop (72,82,92) of the cable (71,81,91), for maintaining the respective relative pitch orientation (P) between adjacent loops of the plurality of loops (72,82,92);
and
a plurality of electrically conductive electrical connectors (74,84,94) interposed between the first (46) and second (48) coil holders, each electrical connector (74,84,94) in a corresponding loop (72,82,92) of the cable (71,81,91) having separable first (76,84A,96) and second (78,84B,98) connector portions respectively conductively coupled in series within the corresponding loop (72,82,92) of the cable (71,81,91); and
a power source (64) coupled to the cable (71,81,91) of the heating jacket (70,80,90), for heating the first component (10) when the first (76,84A,96) and second (78,84B,98) connector portions of the plurality of electrical connectors (74,84,94) are respectively coupled to each other, wherein the heating is achieved by passing current through the respective cable loops (72,82,92), so that the first component (10) is heated to a higher temperature than a second component (12),
**characterized in that,** the plurality of loops (72,82,92) are designed as discrete closed loops (72,82,92), for localized heating about the first component (10) and the second component (12) the induction heating apparatus is configured to selectively vary the pitch spacing (P) between the adjacent loops (72,82,92), for selectively varying locally rate of heat transfer to the first component (10), and the power source (64) is embodied to vary the applied power to each individual loop (72, 82, 92).

2. The induction heating apparatus of claim 1, wherein the cable (71, 81, 91) further comprising an array of the plurality of discrete closed loops (72, 82, 92) that respectively are coupled electrically to their corresponding power source (64) independently (72), or in series (91) or in parallel (86, 88) circuits.

3. The induction heating apparatus of claims 1-2, , further comprising:
one of the first (76,84A,96) or the second (78,84B,98) connector portions of at least one electrical connector (74,84,94) coupled to the first coil holder (46), electrically isolated from all of the other electrical connectors (54), while electrically conductively coupled in series with its corresponding cable loop (72,82,92);
the other of the first (76,84A,96) or the second (78,84B,98) connector portions of the at least one electrical connector (74,84,94) coupled to the second coil holder (48), electrically isolated from all of the other electrical connectors (74,84,94), while electrically conductively coupled in series with its corresponding cable loop (72,82,92),
at least one of the first (76,84A,96) and the second (78,84B,98) connector portions respectively comprising mating insertable male and female portions that are selectively retained in an inserted position upon mutual coupling of the first (46) and second (48) coil holders to each other.

4. The induction heating apparatus of claims 1-3, further comprising:
at least one temperature sensor (15) coupled to the first component (10), for sensing first component temperature;
a controller (30) coupled to the at least one temperature sensor (15) and the power source (64), for regulating current flow passed through the loops (72,82,92) by the power source (64) based at least in part by first component (10) temperature sensed by the temperature sensor (15),
the controller (30) regulating current power intensity and application time in accordance with a predetermined regulation plan, but altering the regulation plan if temperature sensed by the at least one temperature sensor (15) exceeds one or more predetermined temperatures.

5. The induction heating apparatus of claim 1, the first and second components respectively comprising a hub (10) and a shaft (12).

6. A method for disassembly or assembly of an inner surface of a first component from a mating outer surface of a second component of a gas turbine engine, comprising:
providing a flexible heating jacket (70,80,90) having: an electrically conductive, flexible cable (71,81,91), the cable having a plurality of loops (72,82,92) and a plurality of electrically conductive electrical connectors (74,84,94) respectively having separable first (76,84A,96) and second (78,84B,98) connector portions respectively conductively coupled in series within a corresponding loop (72,82,92) of the cable (71,81,91);
separating each of the respective first (76,84A,96) and second (78,84B,98) connector portions of each electrical connector (74,84,94) from each other;
inserting an outer surface (18) of the first component (10) within the jacket (70,80,90) by passing the first component (10) between separated first (76,84A,96) and second (78,84B,98) connector portions of each electrical connector (74,84,94), coupling the respective first (76,84A,96) and second (78,84B,98) connector portions of each electrical connector (74,84,94) to each other, enveloping the outer circumferential surface of the first component (10) in abutting contact with the loops (72,82,92);
heating the first component (10) by supplying electrical current to the flexible cable (71,81,91) of the heating jacket (70,80,90) with a power source (64), increasing relative temperature of the first component (10) higher than that of a second component (12), and expanding an inner surface (17) of the first component (10) greater than an outer surface (19) of the second component (12); and
separating or joining the heated inner surface (17) of the first component (10) and the mating outer surface (19) of the second component (10),
**characterized in that,** the plurality of loops (72,82,92) are designed as discrete closed loops (72,82,92),
the method further comprising selectively varying heat induction rate about the first component (10) by selectively varying relative pitch spacing (P) orientation between adjacent loops (72,82,92) in the flexible heating jacket (70,80,90), wherein localized heating about the first component (10) and the second component (12) is varied by selectively varying pitch spacing (P) between the loops (72,82,92) and by varying the applied power to each individual loop (72, 82, 92).

7. The method of claim 6, further comprising reducing relative pitch spacing (P) orientation between adjacent loops (72,82,92) in areas of the first component (10) having greater thermal mass between (13) the respective outer surfaces of the first (10) and second component (12), and increasing relative pitch spacing between adjacent loops in areas of the first (10) component having less thermal mass (13A) there between.

8. The method of claims 6-7, further comprising regulating current flow passed through the loops (72,82,92) by the power source (64) with a controller (30) coupled to the power source, the controller (30) regulating current power intensity and application time in accordance with a predetermined regulation plan, the regulation plan maintaining local temperature about the entire first component (10) below a predetermined maximum temperature.

9. The method of claim 8, further comprising:
sensing first component (10) temperature at one or more locations thereof with respective temperature sensors (15) coupled to the controller (30) in a feedback loop; and
regulating current flow passed through the loops (72,82,92) by the power source (64) with the controller, based at least in part by first component temperature sensed by one or more of the temperature sensors.

10. The method of claim 9, further comprising:
sensing first component (10) temperature with a plurality of temperature sensors (15) coupled to the first component in an array;
regulating current power intensity and application time with the controller (30) in accordance with a predetermined regulation plan, but altering the regulation plan if temperature sensed by any temperature sensor (15) exceeds one or more predetermined temperatures.

11. The method of claims 9-10, further comprising:
sensing first component (10) temperature with a plurality of first temperature sensors (15) coupled to the first component in an array;
sensing second component (12) temperature with a plurality of second temperature sensors (16) coupled thereto in an array;
regulating current power intensity and application time with the controller (30) in accordance with a predetermined regulation plan, but altering the regulation plan if temperature sensed by any of the first (15) or second (16) temperature sensors exceeds one or more predetermined temperatures.

12. The method of claims 9-11, further comprising separating or joining the heated first component (10) and the second component (12), when respective temperatures measured by all of the first sensors (15) exceeds respective temperatures measured by all of the second sensors (16) by a predetermined temperature difference.

## Patentansprüche

1. Induktionsheizeinrichtung zur Demontage oder Montage einer ersten Komponente von einer zweiten Komponente eines Gasturbinentriebwerks, umfassend
einen flexiblen Heizmantel (70, 80, 90) zum Wickeln um eine äußere Umfangsfläche (18) einer ersten Komponente (10) eines Gasturbinentriebwerks (2), wobei der Heizmantel (70, 80, 90) Folgendes aufweist:
ein elektrisch leitfähiges, flexibles Kabel (71, 81, 91), das mehrere Schleifen (72, 82, 92) aufweist, wobei die Schleifen (72, 82, 92) gemeinsam ein dreidimensionales Profil definieren, das eine relative Teilungsausrichtung (P) zwischen benachbarten Schleifen (72, 82, 92) definiert, wobei das dreidimensionale Profil selektiv so dimensioniert ist, dass es an der ersten Komponente (10) anliegt und diese einhüllt, wenn sie von dem Mantel (70, 80, 90) umwickelt ist;
ein Paar erster (46) und zweiter (48) Spulenhalter, die jeweils mit jeder jeweiligen Schleife (72, 82, 92) des Kabels (71, 81, 91) gekoppelt sind, um die jeweilige relative Teilungsausrichtung (P) zwischen benachbarten Schleifen der mehreren Schleifen (72, 82, 92) aufrechtzuerhalten; und
mehrere elektrisch leitfähige elektrische Verbinder (74, 84, 94), die zwischen den ersten (46) und zweiten (48) Spulenhaltern angeordnet sind, wobei jeder elektrische Verbinder (74, 84, 94) in einer entsprechenden Schleife (72, 82, 92) des Kabels (71, 81, 91) trennbare erste (76, 84A, 96) und zweite (78, 84B, 98) Verbinderabschnitte aufweist, die jeweils leitfähig in Reihe innerhalb der entsprechenden Schleife (72, 82, 92) des Kabels (71, 81, 91) gekoppelt sind; und
eine Leistungsquelle (64), die mit dem Kabel (71, 81, 91) des Heizmantels (70, 80, 90) gekoppelt ist, um die erste Komponente (10) zu erwärmen, wenn die ersten (76, 84A, 96) und zweiten (78, 84B, 98) Verbinderabschnitte der mehreren elektrischen Verbinder (74, 84, 94) jeweils miteinander gekoppelt sind, wobei die Erwärmung durch Leiten von Strom durch die jeweiligen Kabelschleifen (72, 82, 92) erreicht wird, so dass die erste Komponente (10) auf eine höhere Temperatur erwärmt wird als die zweite Komponente (12),
**dadurch gekennzeichnet, dass** die mehreren Schleifen (72, 82, 92) als diskrete geschlossene Schleifen (72, 82, 92) ausgebildet sind,
wobei zum lokalisierten Erwärmen um die erste Komponente (10) und die zweite Komponente (12) die Induktionsheizeinrichtung dazu ausgestaltet ist, den Teilungsabstand (P) zwischen den benachbarten Schleifen (72, 82, 92) selektiv zu variieren, um die lokale Wärmeübertragungsrate auf die erste Komponente (10) selektiv zu variieren, und wobei die Leistungsquelle (64) dazu ausgeführt ist, die an jede einzelne Schleife (72, 82, 92) angelegte Leistung zu variieren.

2. Induktionsheizeinrichtung nach Anspruch 1, wobei das Kabel (71, 81, 91) ferner ein Array aus den mehreren diskreten geschlossenen Schleifen (72, 82, 92) umfasst, die jeweils unabhängig (72) oder in Reihe (91) oder in parallelen (86, 88) Schaltungen elektrisch mit ihrer entsprechenden Leistungsquelle (64) gekoppelt sind.

3. Induktionsheizeinrichtung nach den Ansprüchen 1-2, ferner umfassend:
einen der ersten (76, 84A, 96) oder der zweiten (78, 84B, 98) Verbinderabschnitte mindestens eines elektrischen Verbinders (74, 84, 94), der mit dem ersten Spulenhalter (46) gekoppelt ist, der elektrisch von allen anderen elektrischen Verbindern (54) isoliert ist, während er elektrisch leitfähig in Reihe mit seiner entsprechenden Kabelschleife (72, 82, 92) gekoppelt ist; den anderen der ersten (76, 84A, 96) oder der zweiten (78, 84B, 98) Verbinderabschnitte des mindestens einen elektrischen Verbinders (74, 84, 94), der mit dem zweiten Spulenhalter (48) gekoppelt ist, der elektrisch von allen anderen elektrischen Verbindern (74, 84, 94) isoliert ist, während er elektrisch leitfähig in Reihe mit seiner entsprechenden Kabelschleife (72, 82, 92) gekoppelt ist,
mindestens einen der ersten (76, 84A, 96) und der zweiten (78, 84B, 98) Verbinderabschnitte, jeweils umfassend einführbare männliche und weibliche Gegenabschnitte, die selektiv in einer eingeführten Position gehalten werden, wenn die ersten (46) und zweiten (48) Spulenhalter miteinander gekoppelt sind.

4. Induktionsheizeinrichtung nach den Ansprüchen 1-3, ferner umfassend:
mindestens einen Temperatursensor (15), der mit der ersten Komponente (10) gekoppelt ist, um eine Temperatur der ersten Komponente zu erfassen;
eine Steuerung (30), die mit dem mindestens einen Temperatursensor (15) und der Leistungsquelle (64) gekoppelt ist, um einen durch die Leistungsquelle (64) durch die Schleifen (72, 82, 92) geleiteten Stromfluss zumindest teilweise basierend auf der durch den Temperatursensor (15) erfassten Temperatur der ersten Komponente (10) zu regeln,
wobei die Steuerung (30) eine Stromleistungsintensität und eine Anlagezeit gemäß einem vorbestimmten Regelplan regelt, jedoch den Regelplan ändert, wenn die durch den mindestens einen Temperatursensor (15) erfasste Temperatur eine oder mehrere vorbestimmte Temperaturen überschreitet.

5. Induktionsheizeinrichtung nach Anspruch 1, wobei die ersten und zweiten Komponenten jeweils eine Nabe (10) und eine Welle (12) umfassen.

6. Verfahren zur Demontage oder Montage einer Innenfläche einer ersten Komponente von einer Gegenaußenfläche einer zweiten Komponente eines Gasturbinentriebwerks, umfassend:
Bereitstellen eines flexiblen Heizmantels (70, 80, 90), der Folgendes aufweist: ein elektrisch leitfähiges, flexibles Kabel (71, 81, 91), wobei das Kabel mehrere Schleifen (72, 82, 92) und mehrere elektrisch leitfähige elektrische Verbinder (74, 84, 94) aufweist, die jeweils trennbare erste (76, 84A, 96) und zweite (78, 84B, 98) Verbinderabschnitte aufweisen, die jeweils leitfähig in Reihe innerhalb einer entsprechenden Schleife (72, 82, 92) des Kabels (71, 81, 91) gekoppelt sind;
Trennen jedes der jeweiligen ersten (76, 84A, 96) und zweiten (78, 84B, 98) Verbinderabschnitte jedes elektrischen Verbinders (74, 84, 94) voneinander;
Einführen einer Außenfläche (18) der ersten Komponente (10) in den Mantel (70, 80, 90) durch Hindurchführen der ersten Komponente (10) zwischen getrennten ersten (76, 84A, 96) und zweiten (78, 84B, 98) Verbinderabschnitten jedes elektrischen Verbinders (74, 84, 94),
Koppeln der jeweiligen ersten (76, 84A, 96) und zweiten (78, 84B, 98) Verbinderabschnitte jedes elektrischen Verbinders (74, 84, 94) miteinander, wobei die Außenumfangsfläche der ersten Komponente (10) in anliegendem Kontakt mit den Schleifen (72, 82, 92) eingehüllt wird;
Erwärmen der ersten Komponente (10) durch Zuführen von elektrischem Strom zu dem flexiblen Kabel (71, 81, 91) des Heizmantels (70, 80, 90) mit einer Stromquelle (64), wobei die relative Temperatur der ersten Komponente (10) stärker als die einer zweiten Komponente (12) erhöht wird und eine Innenfläche (17) der ersten Komponente (10) stärker als eine Außenfläche (19) der zweiten Komponente (12) ausgedehnt wird; und
Trennen oder Verbinden der erwärmten Innenfläche (17) der ersten Komponente (10) und der Gegenaußenfläche (19) der zweiten Komponente (10),
**dadurch gekennzeichnet, dass** die mehreren Schleifen (72, 82, 92) als diskrete geschlossene Schleifen (72, 82, 92) ausgebildet sind, wobei das Verfahren ferner selektives Variieren einer Wärmeinduktionsrate um die erste Komponente (10) durch selektives Variieren einer Ausrichtung des relativen Teilungsabstands (P) zwischen benachbarten Schleifen (72, 82, 92) in dem flexiblen Heizmantel (70, 80, 90) umfasst, wobei das lokalisierte Erwärmen um die erste Komponente (10) und die zweite Komponente (12) durch selektives Variieren des Teilungsabstands (P) zwischen den Schleifen (72, 82, 92) und durch Variieren der an jede einzelne Schleife (72, 82, 92) angelegten Leistung variiert wird.

7. Verfahren nach Anspruch 6, ferner umfassend Reduzieren einer Ausrichtung des relativen Teilungsabstands (P) zwischen benachbarten Schleifen (72, 82, 92) in Bereichen der ersten Komponente (10) mit größerer thermischer Masse zwischen (13) den jeweiligen Außenflächen der ersten (10) und zweiten Komponente (12) und Erhöhen des relativen Teilungsabstands zwischen benachbarten Schleifen in Bereichen der ersten (10) Komponente mit geringerer thermischer Masse (13A) dazwischen.

8. Verfahren nach den Ansprüchen 6-7, ferner umfassend Regeln des Stromflusses, der durch die Stromquelle (64) durch die Schleifen (72, 82, 92) geleitet wird, mit einer Steuerung (30), die mit der Leistungsquelle gekoppelt ist, wobei die Steuerung (30) eine Stromleistungsintensität und eine Anlagezeit gemäß einem vorbestimmten Regelplan regelt, wobei der Regelplan eine lokale Temperatur um die gesamte erste Komponente (10) unterhalb einer vorbestimmten maximalen Temperatur hält.

9. Verfahren nach Anspruch 8, ferner umfassend:
Erfassen einer Temperatur der ersten Komponente (10) an einer oder mehreren Stellen davon mit jeweiligen Temperatursensoren (15), die mit der Steuerung (30) in einer Rückkopplungsschleife gekoppelt sind; und
Regeln eines Stromflusses, der durch die Stromquelle (64) durch die Schleifen (72, 82, 92)geleitet wird, mit der Steuerung zumindest teilweise basierend auf der durch einen oder mehrere der Temperatursensoren erfassten Temperatur der ersten Komponente.

10. Verfahren nach Anspruch 9, ferner umfassend:
Erfassen einer Temperatur der ersten Komponente (10) mit mehreren Temperatursensoren (15), die mit der ersten Komponente in einem Array gekoppelt sind;
Regeln einer Stromleistungsintensität und einer Anlagezeit mit der Steuerung (30) gemäß einem vorbestimmten Regelplan, jedoch Ändern des Regelplans, wenn die durch einen beliebigen Temperatursensor (15) erfasste Temperatur eine oder mehrere vorbestimmte Temperaturen überschreitet.

11. Verfahren nach den Ansprüchen 9-10, ferner umfassend:
Erfassen einer Temperatur der ersten Komponente (10) mit mehreren ersten Temperatursensoren (15), die mit der ersten Komponente in einem Array gekoppelt sind;
Erfassen einer Temperatur der zweiten Komponente (12) mit mehreren zweiten Temperatursensoren (16), die in einem Array damit gekoppelt sind;
Regeln einer Stromleistungsintensität und einer Anlagezeit mit der Steuerung (30) gemäß einem vorbestimmten Regelplan, jedoch Ändern des Regelplans, wenn die durch einen beliebigen der ersten (15) oder zweiten (16) Temperatursensoren erfasste Temperatur eine oder mehrere vorbestimmte Temperaturen überschreitet.

12. Verfahren nach den Ansprüchen 9-11, ferner umfassend Trennen oder Verbinden der erwärmten ersten Komponente (10) und der zweiten Komponente (12), wenn jeweilige Temperaturen, die durch alle ersten Sensoren (15) gemessen wurden, jeweilige Temperaturen, die durch alle zweiten Sensoren (16) gemessen wurden, um eine vorbestimmte Temperaturdifferenz überschreiten.

## Revendications

1. Appareil de chauffage par induction pour le démontage ou le montage d'un premier composant d'un second composant d'un moteur à turbine à gaz, comprenant :
une chemise chauffante souple (70, 80, 90) pour envelopper une surface circonférentielle externe (18) d'un premier composant (10) d'un moteur à turbine à gaz (2), la chemise chauffante (70, 80, 90) ayant :
un câble souple électriquement conducteur (71, 81 91), ayant une pluralité de boucles (72, 82, 92), les boucles (72,82,92) définissant collectivement un profil tridimensionnel qui définit une orientation de pas (P) relatif entre des boucles (72, 82, 92) adjacentes, le profil tridimensionnel étant sélectivement dimensionné pour venir en butée contre et envelopper le premier composant (10) lorsqu'il est enveloppé par la chemise (70, 80, 90) ;
une paire de premier (46) et second (48) supports de bobine couplés respectivement à chaque boucle (72, 82, 92) respective du câble (71, 81, 91), pour maintenir l'orientation de pas (P) relatif respective entre des boucles adjacentes de la pluralité de boucles (72, 82, 92) ; et
une pluralité de connecteurs électriques électriquement conducteurs (74, 84, 94) interposés entre les premier (46) et second (48) supports de bobine, chaque connecteur électrique (74, 84, 94) dans une boucle (72, 82, 92) correspondante du câble (71, 81, 91) ayant des première (76, 84A, 96) et seconde (78, 84B, 98) parties de connecteur séparables respectivement couplées de manière conductrice en série à l'intérieur de la boucle (72, 82, 92) correspondante du câble (71, 81, 91) ; et
une source d'alimentation (64) couplée au câble (71, 81, 91) de la chemise chauffante (70, 80, 90), pour chauffer le premier composant (10) lorsque les première (76, 84A, 96) et seconde (78, 84B, 98) parties de connecteur de la pluralité de connecteurs électriques (74, 84, 94) sont respectivement couplées l'une à l'autre, dans lequel le chauffage est réalisé en faisant passer un courant à travers les boucles de câble (72, 82, 92) respectives, de sorte que le premier composant (10) est chauffé à une température supérieure à celle d'un second composant (12),
**caractérisé en ce que** la pluralité de boucles (72, 82, 92) sont conçues sous la forme de boucles (72, 82, 92) fermées distinctes, pour un chauffage localisé autour du premier composant (10) et du second composant (12), l'appareil de chauffage par induction est configuré pour faire varier sélectivement l'espacement de pas (P) entre les boucles (72, 82, 92) adjacentes, pour faire varier sélectivement localement le taux de transfert de chaleur vers le premier composant (10), et la source d'alimentation (64) est conçue pour faire varier la puissance appliquée à chaque boucle (72, 82, 92) individuelle.

2. Appareil de chauffage par induction selon la revendication 1, dans lequel le câble (71, 81, 91) comprend en outre un réseau de la pluralité de boucles (72, 82, 92) fermées distinctes qui sont respectivement couplées électriquement à leur source d'alimentation (64) correspondante indépendamment (72), ou en série (91) ou en circuits parallèles (86, 88).

3. Appareil de chauffage par induction selon les revendications 1 à 2, comprenant en outre :
l'une des première (76, 84A, 96) ou seconde (78, 84B, 98) parties de connecteur d'au moins un connecteur électrique (74, 84, 94) couplée au premier support de bobine (46), isolée électriquement de tous les autres connecteurs électriques (54), tout en étant couplée électriquement de manière conductrice en série avec sa boucle de câble (72, 82, 92) correspondante ;
l'autre des première (76, 84A, 96) ou seconde (78, 84B, 98) parties de connecteur de l'au moins un connecteur électrique (74, 84, 94) couplée au second support de bobine (48), isolée électriquement de tous les autres connecteurs électriques (74, 84, 94), tout en étant couplée électriquement de manière conductrice en série avec sa boucle de câble (72, 82, 92) correspondante,
au moins l'une des première (76, 84A, 96) et seconde (78, 84B, 98) parties de connecteur comprenant respectivement des parties mâle et femelle pouvant être insérées d'accouplement qui sont retenues sélectivement dans une position insérée lors d'un couplage mutuel des premier (46) et second (48) supports de bobine l'un à l'autre.

4. Appareil de chauffage par induction selon les revendications 1 à 3, comprenant en outre :
au moins un capteur de température (15) couplé au premier composant (10), pour détecter une température de premier composant ;
un dispositif de commande (30) couplé à l'au moins un capteur de température (15) et à la source d'alimentation (64), pour réguler un flux de courant passé à travers les boucles (72, 82, 92) par la source d'alimentation (64) sur la base au moins en partie d'une température de premier composant (10) détectée par le capteur de température (15),
le dispositif de commande (30) régulant une intensité de puissance de courant et un temps d'application en fonction d'un plan de régulation prédéterminé, mais en modifiant le plan de régulation si la température détectée par l'au moins un capteur de température (15) dépasse une ou plusieurs températures prédéterminées.

5. Appareil de chauffage par induction selon la revendication 1, les premier et second composants comprenant respectivement un moyeu (10) et un arbre (12).

6. Procédé de démontage ou de montage d'une surface interne d'un premier composant à partir d'une surface externe d'accouplement d'un second composant d'un moteur à turbine à gaz, comprenant :
la fourniture d'une chemise chauffante souple (70, 80, 90) ayant : un câble souple électriquement conducteur (71, 81, 91), le câble ayant une pluralité de boucles (72, 82, 92) et une pluralité de connecteurs électriques électriquement conducteurs (74, 84, 94) ayant respectivement des première (76, 84A, 96) et seconde (78, 84B, 98) parties de connecteur séparables respectivement couplées de manière conductrice en série à l'intérieur d'une boucle (72, 82, 92) correspondante du câble (71, 81, 91) ;
la séparation de chacune des première (76, 84A, 96) et seconde (78, 84B, 98) parties de connecteur respectives de chaque connecteur électrique (74, 84, 94) l'une de l'autre ;
l'insertion d'une surface externe (18) du premier composant (10) à l'intérieur de la chemise (70, 80, 90) en faisant passer le premier composant (10) entre des première (76, 84A, 96) et seconde (78, 84B, 98) parties de connecteur séparées de chaque connecteur électrique (74, 84, 94),
le couplage des première (76, 84A, 96) et seconde (78, 84B, 98) parties de connecteur respectives de chaque connecteur électrique (74, 84, 94) l'une à l'autre, en enveloppant la surface circonférentielle externe du premier composant (10) en contact de butée avec les boucles (72, 82, 92) ;
le chauffage du premier composant (10) en fournissant un courant électrique au câble souple (71, 81, 91) de la chemise chauffante (70, 80, 90) avec une source d'alimentation (64), l'augmentation de la température relative du premier composant (10) au-dessus de celle d'un second composant (12), et l'extension d'une surface interne (17) du premier composant (10) de sorte qu'elle soit plus grande qu'une surface externe (19) du second composant (12) ; et
la séparation ou la jonction de la surface interne chauffée (17) du premier composant (10) et de la surface externe d'accouplement (19) du second composant (10),
**caractérisé en ce que** la pluralité de boucles (72, 82, 92) sont conçues sous la forme de boucles (72, 82, 92) fermées distinctes, le procédé comprenant en outre la variation sélectivement du taux d'induction de chaleur autour du premier composant (10) en faisant varier sélectivement une orientation d'espacement de pas (P) relatif entre des boucles (72, 82, 92) adjacentes dans la chemise chauffante souple (70, 80, 90), dans lequel un chauffage localisé autour du premier composant (10) et du second composant (12) est varié en faisant varier sélectivement l'espacement de pas (P) entre les boucles (72, 82, 92) et en faisant varier la puissance appliquée à chaque boucle (72, 82, 92) individuelle.

7. Procédé selon la revendication 6, comprenant en outre la réduction de l'orientation d'espacement de pas (P) relatif entre des boucles (72, 82, 92) adjacentes dans des zones du premier composant (10) ayant une masse thermique supérieure entre (13) les surfaces externes respectives des premier (10) et second composants (12), et l'augmentation de l'espacement de pas relatif entre des boucles adjacentes dans des zones du premier composant (10) ayant moins de masse thermique (13A) entre elles.

8. Procédé selon les revendications 6 à 7, comprenant en outre la régulation d'un flux de courant passé à travers les boucles (72, 82, 92) par la source d'alimentation (64) avec un dispositif de commande (30) couplé à la source d'alimentation, le dispositif de commande (30) régulant une intensité de puissance de courant et un temps d'application en fonction d'un plan de régulation prédéterminé, le plan de régulation maintenant une température locale autour de tout le premier composant (10) en dessous d'une température maximale prédéterminée.

9. Procédé selon la revendication 8, comprenant en outre :
la détection d'une température de premier composant (10) au niveau d'un ou plusieurs emplacements de celui-ci avec des capteurs de température (15) respectifs couplés au dispositif de commande (30) dans une boucle de rétroaction ; et
la régulation d'un flux de courant passé à travers les boucles (72, 82 92) par la source d'alimentation (64) avec le dispositif de commande, sur la base au moins en partie d'une température de premier composant détectée par un ou plusieurs des capteurs de température.

10. Procédé selon la revendication 9, comprenant en outre :
la détection d'une température de premier composant (10) avec une pluralité de capteurs de température (15) couplés au premier composant dans un réseau ;
la régulation d'une intensité de puissance de courant et d'un temps d'application avec le dispositif de commande (30) en fonction d'un plan de régulation prédéterminé, mais en modifiant le plan de régulation si la température détectée par un quelconque capteur de température (15) dépasse une ou plusieurs températures prédéterminées.

11. Procédé selon les revendications 9 à 10, comprenant en outre :
la détection d'une température de premier composant (10) avec une pluralité de premiers capteurs de température (15) couplés au premier composant dans un réseau ;
la détection d'une température de second composant (12) avec une pluralité de seconds capteurs de température (16) couplés à celui-ci dans un réseau ;
la régulation d'une intensité de puissance de courant et d'un temps d'application avec le dispositif de commande (30) en fonction d'un plan de régulation prédéterminé, mais en modifiant le plan de régulation si la température détectée par l'un quelconque des premiers (15) ou seconds (16) capteurs de température dépasse une ou plusieurs températures prédéterminées.

12. Procédé selon les revendications 9 à 11, comprenant en outre la séparation ou la jonction du premier composant (10) et du second composant (12) chauffés, lorsque des températures respectives mesurées par tous les premiers capteurs (15) dépassent des températures respectives mesurées par tous les seconds capteurs (16) d'une différence de température prédéterminée.
